# EUROPÄISCHE PATENTANMELDUNG

(11) **EP 1 050 843 A2**
(43) Veröffentlichungstag der Anmeldung: **08.11.2000**
(21) Anmeldenummer: 00104090.6
(22) Anmeldetag: 28.02.2000
(51) Int. Cl.: G06K 7/12

(54) **Lunineszenztaster**

(30) Priorität: 03.05.1999 DE 19920311
(71) Anmelder: Sick AG, 79183 Waldkirch, Breisgau (DE)
(72) Erfinder: Haas, Peter, 79341 Kenzingen (DE); Hirt, Günter, 77790 Steinach (DE)
(74) Vertreter: Manitz, Finsterwald & Partner

(57) **Zusammenfassung**

Die Erfindung betrifft einen Lumineszenztaster zur Detektion von Lumineszenzmarken, mit wenigstens einem Sender zum Aussenden einer elektromagnetischen Sendestrahlung in einen Überwachungsbereich, wenigstens einem photoelektrischen Empfänger zum Empfang einer von einer im Überwachungsbereich befindlichen Lumineszenzmarke remittierten elektromagnetischen Empfangsstrahlung, und einer Auswerteschaltung zur Auswertung eines von dem Empfänger abgegebenen Empfangssignals. Der Sender ist zum Aussenden von Sendestrahlung eines nicht sichtbaren Wellenlängenbereichs und der Empfänger zum Empfang von Empfangsstrahlung eines nicht sichtbaren Wellenlängenbereichs ausgebildet. Die Erfindung betrifft ferner ein entsprechendes Verfahren zur Detektion von Lumineszenzmarken.

## Beschreibung

Die Erfindung betrifft einen Lumineszenztaster zur Detektion von Lumineszenzmarken, mit wenigstens einem Sender zum Aussenden einer elektromagnetischen Sendestrahlung in einen Überwachungsbereich, wenigstens einem photoelektrischen Empfänger zum Empfang einer von einer im Überwachungsbereich befindlichen Lumineszenzmarke remittierten elektromagnetischen Empfangsstrahlung, und einer Auswerteschaltung zur Auswertung eines von dem Empfänger abgegebenen Empfangssignals.

Die Erfindung betrifft weiterhin ein entsprechendes Verfahren zur Detektion von Lumineszenzmarken, bei dem elektromagnetische Sendestrahlung in einen Überwachungsbereich ausgesendet wird, bei dem ferner in Abhängigkeit von elektromagnetischer Empfangsstrahlung, die von einer im Überwachungsbereich befindlichen Lumineszenzmarke remittiert wird, ein Empfangssignal erzeugt wird und bei dem das Empfangssignal auf das Vorhandensein einer Lumineszenzmarke innerhalb des Überwachungsbereichs ausgewertet wird.

Derartigen Lumineszenztastern liegt das Funktionsprinzip zugrunde, daß die Lumineszenzmarke durch die Sendestrahlung zur Emission von elektromagnetischer Strahlung, insbesondere Licht angeregt wird, deren Wellenlänge sich von der Wellenlänge der Sendestrahlung unterscheidet. Insbesondere sind Lumineszenztaster üblich, deren Sender Ultraviolett-Strahlung aussenden und die im sichtbaren Spektralbereich detektieren. Durch diesen Wellenlängenunterschied wird eine direkte Beeinflussung des Empfängers durch die Sendestrahlung verhindert.

Nachteilig an den bekannten Lumineszenztastern ist, daß das zugrundeliegende Detektionsprinzip leicht nachgeahmt werden kann. Beispielsweise werden die Lumineszenztaster zur Abwehr von Produktpiraterie für das Identifizieren von Lumineszenzmarken an Markenartikeln, wie z. B. hochwertiger Kleidung verwendet. Auch für das Erkennen gefälschter Dokumente finden Lumineszenztaster Anwendung. Jedoch sind inzwischen UV-Lampen frei erhältlich, in deren Emissionsspektrum die Wellenlänge der bei den bekannten Lumineszenztastern üblicherweise verwendeten UV-Sendestrahlung fällt. Unter Verwendung solcher UV-Lampen kann die Lumineszenzmarke also schnell erkannt und dementsprechend leicht imitiert werden, da sie für den Beobachter ohne weiteres ersichtlich im sichtbaren Spektralbereich remittiert. Daher ist die Nachahmung des erläuterten Detektionsprinzips bzw. die Anbringung gefälschter entsprechender Lumineszenzmarken inzwischen unerwünscht einfach.

Es ist eine Aufgabe der Erfindung, einen Lumineszenztaster und ein Verfahren zur Detektion von Lumineszenzmarken mit einer höheren Nachahmungssicherheit zu schaffen.

Diese Aufgabe wird für einen Lumineszenztaster der eingangs genannten Art dadurch gelöst, daß der Sender zum Aussenden von Sendestrahlung eines nicht sichtbaren Wellenlängenbereichs und der Empfänger zum Empfang von Empfangsstrahlung eines nicht sichtbaren Wellenlängenbereichs ausgebildet ist.

Durch einen derartigen Lumineszenztaster ist also gewährleistet, daß sowohl die Anregung der Lumineszenzmarke, als auch deren nachfolgende Emission außerhalb des dem menschlichen Auge zugänglichen Spektralbereichs erfolgen. Dadurch wird in erwünschter Weise das Auffinden einer entsprechenden Lumineszenzmarke erschwert bzw. setzt einen vergleichsweise hohen technischen Aufwand voraus. Die diesem Lumineszenztaster entsprechende Lumineszenzmarke ist also zweckmäßigerweise so ausgebildet, daß sie mit dem bloßen Auge nicht wahrnehmbar ist. Im Gegensatz zu dem Funktionsprinzip herkömmlicher Lumineszenztaster wird eine derartige Lumineszenzmarke insbesondere auch dann nicht mit bloßem Auge erkannt, wenn sie von einer UV-Lampe bestrahlt wird.

Dadurch wird das Imitieren eines Gegenstandes durch die Erfindung also erschwert, da solche Lumineszenzmarken an dem Original angebracht werden können, die von Fälschern nicht ohne weiteres erkannt und dementsprechend nur schwer imitiert werden können.

Für den erläuterten Lumineszenztaster kommen insbesondere folgende Betriebsarten in Betracht:
a) Sendestrahlung im Ultravioletten, Empfangsstrahlung im Ultravioletten;
b) Sendestrahlung im Ultravioletten, Empfangsstrahlung im Infraroten;
c) Sendestrahlung im Infraroten, Empfangsstrahlung im Infraroten;
d) Sendestrahlung im Infraroten, Empfangsstrahlung im Ultravioletten.

Die letztgenannte Betriebsart erweist sich im Hinblick auf die erwünschte Nachahmungssicherheit als besonders vorteilhaft, da sie von energetisch ungünstigen Umwandlungsprozessen innerhalb der verwendeten Lumineszenzmarke ausgeht und dementsprechend eine besonders unübliche Auswahl von Anregungs- und Remissionswellenlänge darstellt.

Für die vorstehend unter a), b) und d) genannte ultraviolette Sendestrahlung bzw. Empfangsstrahlung kann auf die Spektralbereiche UV-A, UV-B oder UV-C zurückgegriffen werden. Insbesondere kann die jeweilige Strahlung innerhalb eines Wellenlängenbereichs von 100 nm bis 400 nm liegen. Vorzugsweise wird eine Wellenlänge oberhalb von 315 nm gewählt, da in diesem Fall auf die Verwendung von Quarzglas verzichtet werden kann. Besonders geeignet ist insbesondere der Wellenlängenbereich von 350 nm bis 390 nm.

Der infrarote Spektralbereich gemäß den vorstehend erläuterten Betriebsarten b) bis d) des Lumineszenztasters kann beispielsweise zwischen 700 nm und 200 µm liegen. Insbesondere für die Sendestrahlung ist der Wellenlängenbereich von 760 nm bis 1,6 µm bevorzugt, da in diesem Bereich für den Sender auf leicht erhältliche Halbleiter-Leuchtdioden und -laserdioden zurückgegriffen werden kann, die z. B. aus der Lichtleitertechnik bekannt sind. Insbesondere eine Wellenlänge von ungefähr 980 nm ist in dieser Hinsicht besonders bevorzugt.

Es ist ferner bevorzugt, wenn der Sender und/oder der Empfänger hinsichtlich der Sendestrahlung bzw. Empfangsstrahlung zwischen unterschiedlichen Wellenlängen oder Wellenlängenbereichen umgeschaltet werden kann. Dadurch ist es möglich, mehrere oder alle der vorstehend erläuterten Betriebsarten a) bis d) innerhalb eines einzigen Lumineszenztasters zu realisieren. Eine solche Umschaltbarkeit ist auch dann von Vorteil, wenn Sender und/oder Empfänger nicht nur zwischen UV- und IR-Bereich, sondern zwischen verschiedenen diskreten Wellenlängen innerhalb desselben Bereichs, also des IR-Bereichs oder des UV-Bereichs, umgeschaltet werden können.

Unter Verwendung eines einzigen Lumineszenztasters kann dann eine große Anzahl verschiedener Lumineszenzmarken selektiv erkannt werden, wodurch die Nachahmung eines entsprechend gekennzeichneten Gegenstandes noch weiter erschwert wird. Insbesondere bedeutet es keinen besonderen Umstand, den zu kennzeichnenden Gegenstand mit mehreren Lumineszenzmarken zu versehen, die in jeweils völlig unterschiedlichen Wellenlängen bzw. Wellenlängenbereichen angeregt werden und/oder remittieren. Diese mehreren verschiedenen Lumineszenzmarken an einem Gegenstand können innerhalb eines einzigen Derektionsdurchlaufs erkannt werden, beispielsweise indem der Lumineszenztaster ständig zwischen den entsprechenden Betriebsarten bzw. Wellenlängen und Wellenlängenbereichen wechselt.

Die Umschaltbarkeit zwischen verschiedenen Wellenlängen bzw. Wellenlängenbereichen kann beispielsweise durch Vorsehung verschiedener, insbesondere automatisch auswechselbarer Filter an Sender bzw. Empfänger realisiert werden. Alternativ ist es auch möglich, mehrere Sender und/oder Empfänger vorzusehen, die jeweils einer Wellenlänge bzw. einem Wellenlängenbereich zugeordnet sind und die entsprechend der gewünschten Betriebsart selektiv aktiviert werden. Ein besonders einfacher Wechsel zwischen den verschiedenen Betriebsarten des Lumineszenztasters ergibt sich, wenn der Sender und/oder der Empfänger elektronisch zwischen den verschiedenen Wellenlängen oder Wellenlängenbereichen der Sendestrahlung bzw. Empfangsstrahlung umgeschaltet werden kann, beispielsweise durch entsprechende Beeinflussung des Bandabstands innerhalb eines Halbleiters.

Bei der erläuterten Realisierung mehrerer Betriebsarten innerhalb eines einzigen Lumineszenztasters ist es selbstverständlich auch möglich, zusätzlich die herkömmliche Detektion mittels des Empfängers im Sichtbaren vorzusehen, und zwar für eine Anregung einer entsprechenden Lumineszenzmarke durch Sendestrahlung einer ultravioletten und/oder einer infraroten Wellenlänge.

Der erläuterte Lumineszenztaster kann außerdem als den Überwachungsbereich punktuell abtastender Sensor ausgebildet sein (statisches Strahlenbündel) oder als Scanner, bei dem die Sendestrahlung als Strahlenbündel wiederholt entlang einer Abtastrichtung über den Überwachungsbereich geführt wird.

Die Aufgabe der Erfindung wird für ein Verfahren der eingangs genannten Art dadurch gelöst, daß sowohl die Sendestrahlung als auch die Empfangsstrahlung in einem nicht sichtbaren Wellenlängenbereich liegen.

Die weiteren möglichen Ausführungsformen dieses Verfahrens ergeben sich unmittelbar aus der Betriebsweise des vorstehend erläuterten Lumineszenztasters. Insbesondere können die vier genannten Betriebsarten a) bis d) durchgeführt werden, also das Aussenden bzw. Anregen im Ultravioletten und/oder Infraroten sowie das Empfangen der von der Lumineszenzmarke remittierten Strahlung im Ultravioletten und/oder im Infraroten.

Die erläuterte Aufgabe wird für einen Lumineszenztaster der eingangs genannten Art außerdem durch eine zweite Ausführungsform der Erfindung gelöst, bei welcher der Sender zum Aussenden von Sendestrahlung des infraroten Wellenlängenbereichs und der Empfänger zum Empfang von Empfangsstrahlung des sichtbaren Wellenlängenbereichs ausgebildet ist.

Auch ein derartiger Lumineszenztaster führt zu der erwünschten Erhöhung der Nachahmungssicherheit, da diese Auswahl von Sendestrahlung und Empfangsstrahlung aufgrund der energetisch ungünstigen Umwandlung der Sendestrahlung innerhalb der Lumineszenzmarke völlig unüblich ist und dementsprechend von Fälschern bei der Herstellung von Imitaten nicht überprüft und als mögliche Lumineszenzmarke berücksichtigt wird.

Außerdem bietet dieser Lumineszenztaster den Vorteil einer besonders einfachen und preisgünstigen Herstellung, da für den Infrarot-Sender ohne weiteres auf Halbleiter-Leuchtdioden oder -laserdioden zurückgegriffen werden kann, wie sie insbesondere aus der Lichtleitertechnik bekannt sind. Unter diesem Aspekt ist es bevorzugt, wenn innerhalb eines Wellenlängenbereichs von 760 nm bis 1,6 µm, insbesondere bei einer Wellenlänge von ungefähr 980 nm ausgesendet wird.

Selbstverständlich können die weiteren Merkmale des bereits erläuterten Lumineszenztasters auch bei dieser Ausführungsform der Erfindung realisiert werden. Insbesondere kann dieser Lumineszenztaster mit einem statischen Sendestrahlungsbündel oder als Scanner ausgeführt sein.

Schließlich wird die erläuterte Aufgabe der Erfindung für ein Verfahren der eingangs genannten Art auch dadurch gelöst, daß die Sendestrahlung - entsprechend der erläuterten zweiten Ausführungsform der Erfindung - im infrarotem Wellenlängenbereich und die Empfangsstrahlung im sichtbaren Wellenlängenbereich liegt.

Weitere bevorzugte Ausführungsformen der Erfindung sind in den Unteransprüchen aufgeführt. Die Erfindung wird nachfolgend unter Bezugnahme auf die Zeichnung beispielhaft erläutert. In den Zeichnungen zeigen:
- Fig. 1: eine schematische Darstellung eines erfindungsgemäßen Lumineszenztasters in Autokollimationsanordnung und
- Fig. 2: eine schematische Darstellung eines erfindungsgemäßen Lumineszenztasters in Triangulationsanordnung.

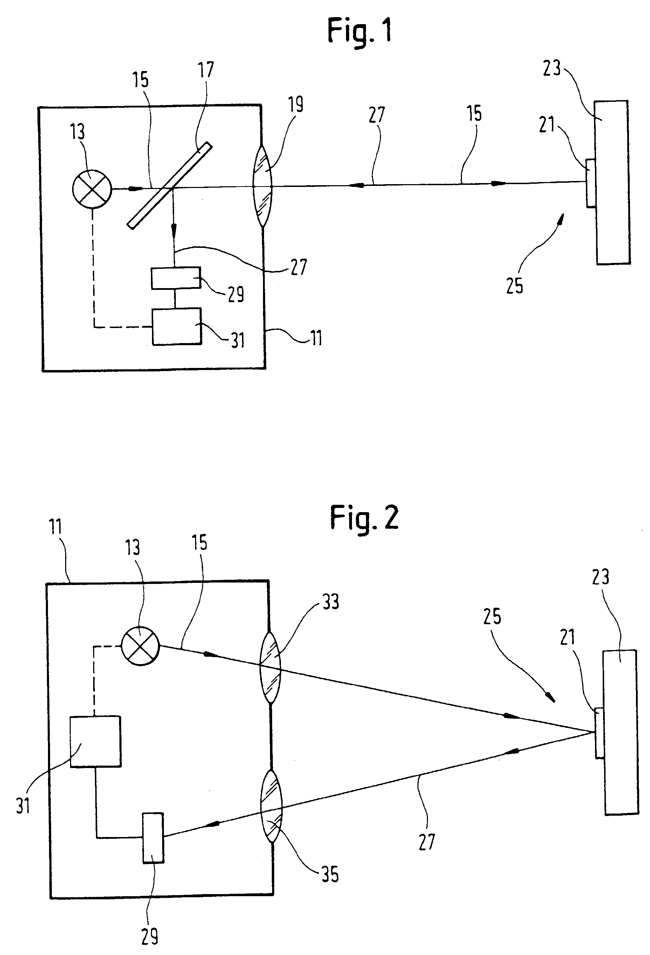

Der Lumineszenztaster gemäß Fig. 1 weist innerhalb eines Gehäuses 11 einen Sender 13 auf, der beispielsweise durch eine LED oder eine Laserdiode gebildet ist. Der Sender 13 emittiert einen Sendestrahl 15, der innerhalb des Gehäuses 11 einen halbdurchlässigen, insbesondere dichroitischen Spiegel 17 und an der Gehäusewandung eine Linse 19 durchläuft.

Außerhalb des Lumineszenztasters trifft der Sendestrahl 15 auf eine Lumineszenzmarke 21, die an einem zu identifizierenden Gegenstand 23 angebracht ist, der innerhalb eines Überwachungsbereichs 25 angeordnet ist.

Die von dem Sender 13 an die Lumineszenzmarke 21 abgegebene Sendestrahlung wird von der Lumineszenzmarke 21 in eine andere Wellenlänge umgewandelt und unter anderem als Empfangsstrahl 27 durch die Linse 19 zurück auf den halbdurchlässigen Spiegel 17 remittiert. Der Spiegel 17 reflektiert den Empfangsstrahl 27 auf einen photoelektrischen Empfänger 29, dem eine Auswerteschaltung 31 nachgeschaltet ist.

Erfindungsgemäß arbeitet der in Fig. 1 gezeigte Lumineszenztaster vollständig außerhalb des sichtbaren Wellenlängenbereichs: Der Sender 13 emittiert den Sendestrahl 15 je nach gewählter Betriebsart mit einer ultravioletten oder infraroten Wellenlänge, und auch der Empfänger 29 detektiert nur im ultravioletten oder infrarotem Wellenlängenbereich. Die Lumineszenzmarke 21 ist mit entsprechenden Pigmenten bzw. Luminophoren versehen.

Je nach Beaufschlagung des Empfängers 29 durch den Empfangsstrahl 27 mit der als Empfangsstrahlung vorgesehenen Wellenlänge liefert der Empfänger 29 ein Empfangssignal an die Auswerteschaltung 31. Diese wertet das Empfangssignal aus, beispielsweise indem sie überprüft, ob die Amplitude des Empfangssignals einen vorbestimmten Grenzwert überschreitet. Falls das Empfangssignal dem Vorhandensein einer Lumineszenzmarke 21 innerhalb des Überwachungsbereich 25 entspricht, liefert die Auswerteschaltung 31 ein Gegenstandsfeststellungssignal.

Die Auswerteschaltung 31 kann außerdem - wie in Fig. 1 gestrichelt dargestellt - mit dem Sender 13 verbunden sein, um das Aussenden des Sendestrahls 15 und den Empfang des Empfangsstrahls 27 zeitlich miteinander zu synchronisieren.

Fig. 2 zeigte einen weiteren Lumineszenztaster, wobei dieselben Teile wie in Fig. 1 mit denselben Bezugszeichen gekennzeichnet sind.

Im Unterschied zu Fig. 1 ist der Lumineszenztaster gemäß Fig. 2 in einer Triangulationsanordnung oder in Pupillenteilung aufgebaut. Dementsprechend verlaufen der Sendestrahl 15 und der Empfangsstrahl 27 V-förmig getrennt voneinander, und es ist eine eigene Sendelinse 33 und eine eigene Empfangslinse 35 vorgesehen.

Auch der in Fig. 2 gezeigte Lumineszenztaster zeichnet sich erfindungsgemäß dadurch aus, daß sowohl der Sendestrahl 15 als auch der Empfangsstrahl 27 eine nicht sichtbare Wellenlänge einnehmen, insbesondere eine ultraviolette und/oder eine infrarote Wellenlänge.

### Bezugszeichenliste

- 11: Gehäuse
- 13: Sender
- 15: Sendestrahl
- 17: halbdurchlässiger Spiegel
- 19: Linse
- 21: Lumineszenzmarke
- 23: Gegenstand
- 25: Überwachungsbereich
- 27: Empfangsstrahl
- 29: Empfänger
- 31: Auswerteschaltung
- 33: Sendelinse
- 35: Empfangslinse

## Patentansprüche

1. Lumineszenztaster zur Detektion von Lumineszenzmarken (21), mit wenigstens einem Sender (13) zum Aussenden einer elektromagnetischen Sendestrahlung (15) in einen Überwachungsbereich (25), wenigstens einem photoelektrischen Empfänger (29) zum Empfang einer von einer im Überwachungsbereich (25) befindlichen Lumineszenzmarke (21) remittierten elektromagnetischen Empfangsstrahlung (27), und einer Auswerteschaltung (31) zur Auswertung eines von dem Empfänger (29) abgegebenen Empfangssignals,
**dadurch gekennzeichnet,**
daß der Sender (13) zum Aussenden von Sendestrahlung (15) eines nicht sichtbaren Wellenlängenbereichs und der Empfänger (29) zum Empfang von Empfangsstrahlung (27) eines nicht sichtbaren Wellenlängenbereichs ausgebildet ist.

2. Lumineszenztaster nach Anspruch 1,
**dadurch gekennzeichnet,**
daß die Sendestrahlung (15) im ultravioletten Wellenlängenbereich liegt, insbesondere innerhalb eines Wellenlängenbereichs von 100 nm bis 400 nm, vorzugsweise von 315 nm bis 400 nm, bevorzugt von 350 nm bis 390 nm, oder daß die Sendestrahlung (15) im infraroten Wellenlängenbereich liegt, insbesondere innerhalb eines Wellenlängenbereichs von 700 nm bis 200 µm, vorzugsweise von 760 nm bis 1,6 µm, bevorzugt bei einer Wellenlänge von ungefähr 980 nm.

3. Lumineszenztaster nach einem der vorherigen Ansprüche,
**dadurch gekennzeichnet,**
daß die Empfangsstrahlung (27) im ultravioletten Wellenlängenbereich liegt, insbesondere innerhalb eines Wellenlängenbereichs von 100 nm bis 400 nm, vorzugsweise von 315 nm bis 400 nm, bevorzugt von 350 nm bis 390 nm, oder daß die Empfangsstrahlung (27) im infraroten Wellenlängenbereich liegt, insbesondere innerhalb eines Wellenlängenbereichs von 700 nm bis 200 µm, vorzugsweise von 760 nm bis 1,6 µm, bevorzugt bei einer Wellenlänge von ungefähr 980 nm.

4. Lumineszenztaster nach einem der vorherigen Ansprüche,
**dadurch gekennzeichnet,**
daß wahlweise Sendestrahlung (15) unterschiedlicher Wellenlängen oder Wellenlängenbereiche aussendbar ist, insbesondere durch Wechsel eines dem Sender (13) zugeordneten Filters, durch elektronisches Umschalten des Senders (13) und/oder durch Aktivierung verschiedener den unterschiedlichen Wellenlängen bzw. Wellenlängenbereichen jeweils zugeordneter Sender (13).

5. Lumineszenztaster nach einem der vorherigen Ansprüche,
**dadurch gekennzeichnet,**
daß wahlweise Empfangsstrahlung (27) unterschiedlicher Wellenlängen oder Wellenlängenbereiche detektierbar ist, insbesondere durch Wechsel eines dem Empfänger (29) zugeordneten Filters, durch elektronisches Umschalten des Empfängers (29) und/oder durch Aktivierung verschiedener den unterschiedlichen Wellenlängen bzw. Wellenlängenbereichen jeweils zugeordneter Empfänger (29).

6. Lumineszenztaster nach einem der vorherigen Ansprüche,
**dadurch gekennzeichnet,**
daß der Sender (13) und der Empfänger (29) dergestalt umschaltbar sind, daß auch Sendestrahlung (15) des infraroten Wellenlängenbereichs aussendbar und Empfangsstrahlung (27) des sichtbaren Wellenlängenbereichs detektierbar ist, und/oder daß der Sender (13) und der Empfänger (29) in Autokollimation oder in Pupillenteilung angeordnet sind.

7. Lumineszenztaster nach einem der vorherigen Ansprüche,
**gekennzeichnet**
durch eine Sendeoptik (19, 33) dergestalt, daß die Sendestrahlung (15) als statisches Strahlenbündel oder als repetitiv in einer Abtastrichtung entlang des Überwachungsbereichs geführtes Strahlenbündel aussendbar ist.

8. Verfahren zur Detektion von Lumineszenzmarken (21), wobei elektromagnetische Sendestrahlung (15) in einen Überwachungsbereich (25) ausgesendet wird, wobei ferner in Abhängigkeit von elektromagnetischer Empfangsstrahlung (27), die von einer im Überwachungsbereich (25) befindlichen Lumineszenzmarke (21) remittiert wird, ein Empfangssignal erzeugt wird und wobei das Empfangssignal auf das Vorhandensein einer Lumineszensmarke (21) innerhalb des Überwachungsbereichs (25) ausgewertet wird,
**dadurch gekennzeichnet,**
daß sowohl die Sendestrahlung (15) als auch die Empfangsstrahlung (27) in einem nicht sichtbaren Wellenlängenbereich liegen.

9. Verfahren nach Anspruch 8,
**dadurch gekennzeichnet,**
daß die Sendestrahlung (15) im ultravioletten und/oder im infraroten Wellenlängenbereich und daß die Empfangsstrahlung (27) im ultravioletten und/oder im infraroten Wellenlängenbereich liegt.

10. Lumineszenztaster zur Detektion von Lumineszenzmarken (21), mit wenigstens einem Sender (13) zum Aussenden einer elektromagnetischen Sendestrahlung (15) in einen Überwachungsbereich (25), wenigstens einem photoelektrischen Empfänger (29) zum Empfang einer von einer im Überwachungsbereich (25) befindlichen Lumineszenzmarke (21) remittierten elektromagnetischen Empfangsstrahlung (27), und einer Auswerteschaltung (31) zur Auswertung eines von dem Empfänger (29) abgegebenen Empfangssignals,
**dadurch gekennzeichnet,**
daß der Sender (13) zum Aussenden von Sendestrahlung (15) des infraroten Wellenlängenbereichs und der Empfänger (29) zum Empfang von Empfangsstrahlung (27) des sichtbaren Wellenlängenbereichs ausgebildet ist, wobei insbesondere die Sendestrahlung (15) innerhalb eines Wellenlängenbereichs von 700 nm bis 200 µm, vorzugsweise von 760 nm bis 1,6 µm, bevorzugt bei einer Wellenlänge von ungefähr 980 nm liegt.

11. Verfahren zur Detektion von Lumineszenzmarken (21), wobei elektromagnetische Sendestrahlung (15) in einen Überwachungsbereich (25) ausgesendet wird, wobei ferner in Abhängigkeit von elektromagnetischer Empfangsstrahlung (27), die von einer im Überwachungsbereich (25) befindlichen Lumineszenzmarke (21) remittiert wird, ein Empfangssignal erzeugt wird und wobei das Empfangssignal auf das Vorhandensein einer Lumineszensmarke (21) innerhalb des Überwachungsbereichs (25) ausgewertet wird,
**dadurch gekennzeichnet,**
daß die Sendestrahlung (15) im infraroten Wellenlängenbereich und die Empfangsstrahlung (27) im sichtbaren Wellenlängenbereich liegt.
